(19)

Europäisches
Patentamt
European
Patent Office
Office européen
des brevets

(11) **EP 2 862 429 A1**

(12) **EUROPEAN PATENT APPLICATION**

(43) Date of publication:
22.04.2015 Bulletin 2015/17

(51) Int Cl.:
*A01B 79/00* (2006.01)     *G01S 15/08* (2006.01)

(21) Application number: 13189371.1

(22) Date of filing: 18.10.2013

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Monford AG Systems Limited Newcastle, Co. Wicklow (IE)**

(72) Inventor: **The designation of the inventor has not yet been filed**

(74) Representative: **Lucey, Michael PurdyLucey Intellectual Property 6-7 Harcourt Terrace D2 Dublin (IE)**

(54) **Ultra sound ranging system and method for measuring the distance between oblique surfaces**

(57)     The invention relates to a device for measuring the quantity of an agricultural product comprising at least one ultrasonic transducer device configured to measure the height of the agricultural product with respect to a ground. At least two ultrasonic transducers configured to allow the orientation or slope of the ground to be calculated, such that the at least three transducers can be at arbitrary orientations with respect to the ground when the device is in motion.

**Figure 1**

# Description

## Field

The invention relates to an ultra sound ranging system and method. In particular the invention relates to an ultra sound ranging system and method for the measurement of an agricultural product, such as grass.

## Background

Most ultrasonic ranging systems rely on a single transducer or transducer pair to measure the range to the nearest object. At lower frequencies, ultrasonic transducers have a wide beam aperture or beam angle such that the object distance can be measured but its direction is not known due to the wide beam aperture.

One such ranging system is disclosed in WO 2013041636 A1 entitled 'System and method for measuring parameters relating to agriculture' where a module can be attached to a pole or a boot during use.

If such a ranging sensor is attached to a pole or boot, it must be maintained at a fixed and known angle in order to accurately measure the range to the crop canopy. In the case of a boot, the sensor angle will continuously change as the walking action involves rotary motion of the leg to which the sensor is affixed. Furthermore, walking on slopes or hills can cause further inaccuracy as the ranging sensors measurement to sloping ground no longer correlates to the ground reference point to where the pole or stick is in contact with the ground.

It is an object of the invention to provide a system and method to overcome at least one of the above mentioned problems.

## Summary

According to one aspect there is provided, as set out in the appended claims, a device for measuring the quantity of an agricultural product comprising:

at least one ultrasonic transducer device configured to measure the height of the agricultural product with respect to a ground; **characterised in that** there is provided
at least two ultrasonic transducers configured to allow the orientation or slope of the ground to be calculated, such that the at least three transducers can be at arbitrary orientations with respect to the ground when the device is in motion.

In one embodiment the ultrasonic transducers are positioned on two orthogonal axes to provide at least three reference points.

In one embodiment the three points are assumed to lie on a plane representing the top of the agricultural product to be measured that sits above the ground reference plane and assumed to be parallel to the ground reference plane.

In one embodiment the vertical distance between the top of the agricultural product and the ground reference plane is calculated giving an accurate height of the agricultural product.

In one embodiment at least one ultrasonic transducer comprises a narrow beam ultrasonic transducer.

In one embodiment a transducer array measures the time of flight between the transmitted sonar pulse and the echoed return that has reflected from the agricultural product.

In one embodiment there is provided a fourth ultrasonic transducer mounted on two axes with said at least three ultrasonic transducers that are orthogonal ensuring that the reflection points can result in vectors that are close to orthogonal to maximise the accuracy in calculating the top of the agricultural product.

In one embodiment the fourth ultrasonic transducer allows for more accurate determination of the plane by calculating multiple planes using a selection of at least three ultrasonic transducers.

In one embodiment there is provided means for calculating multiple grass lengths from multiple selections of four sensors, an average or median grass length can be calculated that better reflects the grass length for that sample area.

In one embodiment there is provided means for calculating multiple product lengths from multiple selections of four transducers, an average or median product length can be calculated that better reflects the product length for that sample area.

In one embodiment there is provided a housing, wherein the housing supports transducer adjustment in a ball and socket arrangement with an internal fastener to lock the angle in place.

In one embodiment at least one transducer is mounted in a housing with the transducer angles fixed configured with openings at various orientations.

In one embodiment at least one transducer is mounted in canisters attached to protruding stalks that are set at pre-desired angles.

In one embodiment there is provided an orientation sensor to measure the orientation of the device when moving and to determine when a measurement is about to be made.

In one embodiment the orientation sensor comprises a nine axis orientation sensor.
means for imaging resolution of target objects or surfaces by taking multiple measurements as the transducers sweep across the surface of the agricultural product during a cycle.

In one embodiment the taking of multiple measurements that are more than the number of physical sensors being used to calculate agricultural product height by having sampled a greater area of the agricultural product.

In one embodiment the calculation of average or median agricultural product length by using the multiple transducer samples allows for more accurate determination of the plane by calculating multiple planes using multiple sets of at least three transducers.

In one embodiment a transmit burst is directed to each transducer in sequence, such that the time delay between each transmit burst is sufficiently long to wait for the time of flight over expected range of the transducer.

In another embodiment there is provided a method for measuring the quantity of an agricultural product using a device comprising:

> configuring at least one ultrasonic transducer device to measure the height of the agricultural product with respect to a ground; **characterised in that** there is provided
> configuring at least two ultrasonic transducers to allow the orientation or slope of the ground to be calculated, such that the at least three transducers can be at arbitrary orientations with respect to the ground when the device is in motion.

There is also provided a computer program comprising program instructions for causing a computer program to carry out the above method which may be embodied on a record medium, carrier signal or read-only memory.

## Brief Description of the Drawings

An embodiment will be more clearly understood from the following description, given by way of example only, with reference to the accompanying drawings, in which:-

> Figure 1 illustrates a device for measuring the quantity of an agricultural product attached to a boot of a user, according to one embodiment;
> Figure 2 illustrates a plurality of sensors arranged on a device according to one embodiment;
> Figure 3 illustrates a Z Axis foot reference and translation sensors to Z axis reference;
> Figure 4 illustrates a walking (Gait) action of a user a number of simplified assumptions; and
> Figure 5 illustrates filter to provide a weighted average of the grass height based on the latest measurements;

## Detailed Description of the Drawings

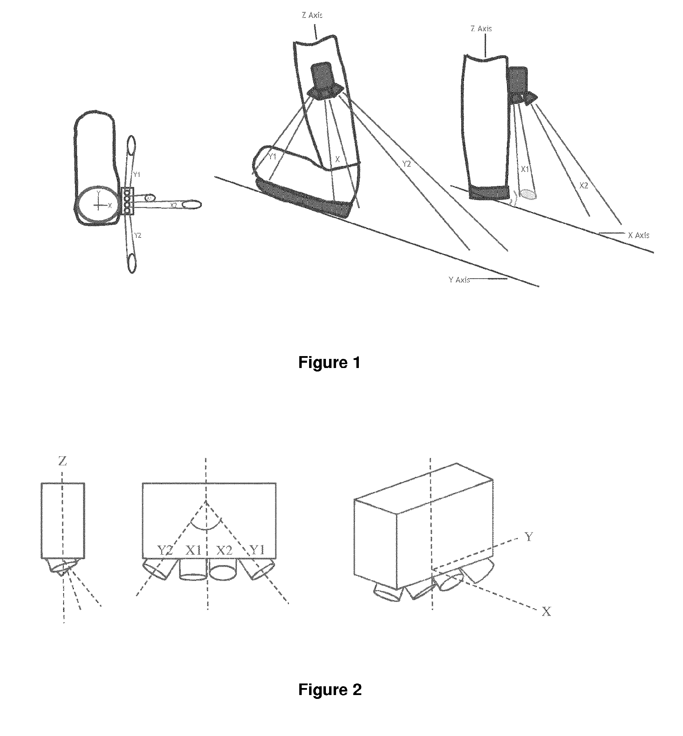

In one embodiment there is provided an ultrasonic sonar ranging device that can measure grass canopy proximity and grass length through the use of multiple angled narrow beam ultrasonic transducers, as shown in Figure 1.

The device works by attaching the sensor array to a walking pole or to the side of a walker's boot. By using a pole or boot, the distance to ground is known such that the sonar ranging will indicate distance to grass between the top of the grass canopy to any depth in the grass that return sonar echoes to the sensor array. The grass length can be calculated by subtracting the distance indicated by the first echo from the known height of the sensor from the ground reference point.

The use of ultrasonic sonar on grass relies on the back scattering effect of grass on a transmitted sonar acoustical signal. The blades of grass will be at arbitrary orientations causing scattering of the sonar signal as it reflects in multiple directions. The sensor array measures the time of flight between the transmitted sonar pulse and the echoed return that has reflected from the grass. The use of multiple angled narrow beam sensors allows the orientation or slope of the ground to be calculated with respect to the sensors such that sensor array can be at arbitrary orientations with respect to the ground while taking valid measurements.

Multiple angled sensors to detect angle of surface to sensor in 3D

The use of multiple angled ranging sensors oriented on two orthogonal axes will indicate the range to four points on the crop canopy, as shown in Figure 2. With known angles, the four reflection points are assumed to lie on a plane representing the grass or crop canopy that sits above the ground reference plane and is assumed to be parallel to the ground reference plane. From this, the vertical distance between the canopy plane and the ground reference plane is calculated giving an accurate height of crop or grass measurement.

Sensor housed in a removable module with angled sensors on both axes

The sensor module is attached to a main controller module as described in prior application WO 2013041636 A1, assigned to the applicant of the present invention, and incorporated fully herein by reference.

Four sensors are angled in such a way as to project beams of ultrasound energy on two orthogonal axes as illustrated in Figure 2. The angles are chosen to ensure no interference or false echoes from the walker's boot or foot or in the case of a walking pole, from the pole itself. The four sensors are mounted on 2 axes that are orthogonal ensuring that the reflection points can result in vectors that are close to orthogonal to maximise the accuracy in calculating the canopy plane. In one embodiment, the housing supports sensor adjustment in a ball and socket arrangement with an internal fastener to lock the angle in place. In another embodiment, the four sensors are mounted in their housing(s) with the orientations fixed with holes at various angles. In a further embodiment, the four sensors are mounted in canisters attached to protruding stalks that are set at the correct angles.

## Four sensors used in various combinations to calculate equations of planes and hence Z Distance

It will be appreciated that only 3 reflection points are actually needed to determine a plane and its slope. The use of the fourth sensor allows for more accurate determination of the plane by calculating multiple planes using a selection of three sensors from the four sensors. Each plane in theory should be the same but due to measurement inaccuracy, the fact that grass length varies over small areas and other factors, each plane will be slightly different. By calculating multiple grass lengths from multiple selections of four sensors, an average or median grass length can be calculated that better reflects the grass length for that sample area.

## Four sensors angled using a spherical coordinate system projecting beams onto a Cartesian plane and resultant Z axis distance calculation

The method by which the planes are calculated using a spherical coordinate system whose origin is located at the position of the central sensor. The projected beams intersect with the crop canopy plane at the reflection points. These reflection points are converted to Cartesian coordinates sharing the same origin as the spherical coordinate system. The three reflection points lie on the plane and must not be collinear from which two vectors on the plane are derived. A normal vector to the plane is calculated by the cross product of the two vectors formed from the 3 reflection points. A plane can be defined using a normal vector and a point on the plane.

$$n.(P - P0) = 0$$

Where n = the normal vector and P0 is one of the reflection points on the plane.

## Z Axis foot reference and translation sensors to Z axis reference

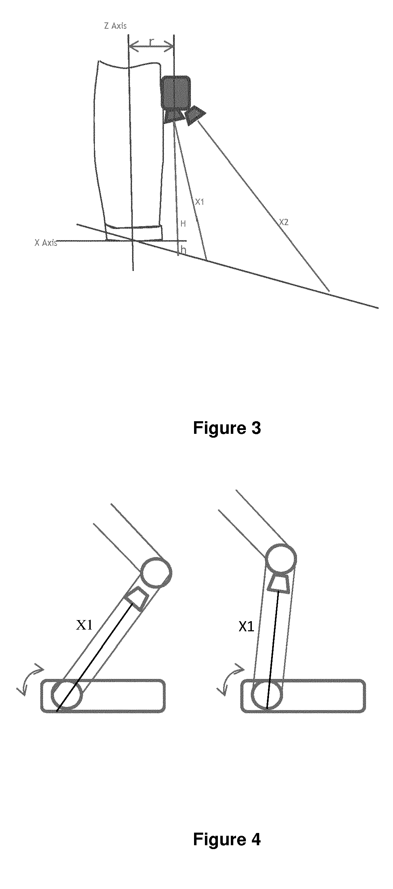

In calculating the spherical coordinates, each sensor is located at its own origin such that each reflection point on the plane is referenced to its sensor's origin. As the sensors are located at different positions, it is firstly necessary to perform a coordinate translation to move each sensor's origin to a single common location. Furthermore, the ideal translated origin is at a location such that the z-axis passes through both the sensor as well as the point of contact between the pole/foot and the ground reference, as illustrated in Figure 3. The Z axis therefore runs through the centre of the pole or through the centre of the leg to the foot heel of the user. The grass height calculation is therefore the distance along the translated Z-axis between the ground contact coordinate and the new translated origin.

## 3D orientation sensor to detect foot on ground duration and foot plonk

The ultrasound ranging measurements depend on a known ground reference using whether a walking pole in contact with the ground or the foot in contact with the ground. This can be detected by use of accelerometers as described in the previously mentioned patent publication number WO 2013041636. The shock of a foot being placed on the ground generates an accelerometer transient that can be used as a trigger to take a measurement. However, a significant improvement in measurement accuracy can be achieved by selecting a more optimal angle of the leg or pole while in contact with the ground. This can be achieved through use of a nine axis 3D orientation sensor to measure the orientation angles of the leg or pole while in contact with the ground. As a result, multiple measurements can be taken per step as the leg or pole angle rotates during the phase of a walking step.

## Sonar Synthetic Aperture

Building on the 3D orientation sensor and using a technique in radar for improving imaging resolution of target objects or surfaces, multiple measurements are taken by the sensors as they sweep across the surface of the crop or grass during the walking step cycle. By taking multiple measurements during a single walking step, the leg or pole angle will sweep through an angular range. This happens when the leg hinges over the ankle joint or the walking pole rotates about the point of contact such that that it changes the angle of projection of the ultrasound sensor beams to different reflection points on the ground. Therefore ranging measurements from each sensor will be taken from multiple reflection points as the sensors sweep across the ground thereby contributing greater accuracy in the calculation of the crop/grass canopy plane. Multiple planes are calculated as the sensors sweep during each walking step. The orientation angles, angular velocity and accelerometer data from the 3D sensor will indicate the phase of the walking step to ensure that the measurements are taken while the foot or pole is in contact with the ground.

## Four sensors ping in sequence with window aperture of the expected echo

In order that the four sensors do not interfere with each other, a transmit burst is directed to each sensor in sequence. The time delay between each transmit burst is sufficiently long to wait for the time of flight over expected range of the sensor. For example in a typical embodiment of the invention, a 200KHz narrow beam sensor has a typical sensitivity range of 2 meters. The time of flight for the farthest point is the time taken to travel out and return a total distance of 4M and at the speed of sound, this is 11.7ms. Therefore the transmitter will send a burst to the 1st sensor and wait for an echo for up to 12ms before proceeding to transmit a burst to the next sensor and so on.

A/D envelope detector output that integrates samples for near field and far field echo

Grass is highly reflective of ultrasonic sound waves in the 200KHz frequency region. As grass is a complex surface made up of small sub centimetre surfaces at arbitrary angles, the projected ultrasound energy is typically back scattered in arbitrary directions. The ultrasound reflections in the direction of the transmitting sensor are attenuated as much of the reflected energy is almost omnidirectional above the surface plane. Ultrasound ranging systems that measure the reflected energy are well documented in prior art. An envelope detector and integrator are typically used to accumulate the reflected energy and are then fed to an analog comparator that will trigger when the received echo envelope exceeds a predefined threshold. This is classed as the near field edge and the trailing edge of the comparator is classed as the far field edge indicating either the end of the reflected echo or the end of the reflected echo of the furthest object. Ultrasound narrow beam sensors project a narrow cone of ultrasound energy onto the crop/grass plane. The projected surface is typically elliptical when the projected beam is at an angle to the surface. This could be considered a conic section whose nearest point to the sensor will indicate the near field rising edge pulse form the envelope comparator. Similarly, the furthest edge of the projected conic section will be coincident with the trailing edge of the projected conic section assuming a narrow burst of transmitted ultrasound energy. On grass surfaces, the nearest field is also indicative of the top of the grass canopy at the nearest side of the conic section. In addition, the angle of the sensor and its cone shaped beam will also generate echoes from the farthest point of the conic section that the projected beam forms when reflecting off the grass canopy. In addition, the ultrasound will also penetrate the grass canopy and reflect from grass near the roots and at soil level. For the purposes of this invention, only the near field is of interest as it is the grass height or crop canopy that is being detected. In another embodiment of the invention, an analog to digital converter is used to digitize the echo envelope and digital gain can be applied to the envelope echo samples based on the time of reception of the echo. This is based on the knowledge that the echo amplitude decreases with range and therefore can be compensated for by a gain function that is proportional to the time of reflection. A more accurate near field position can therefore be established through variable gain signal conditioning of the echo envelope.

Change ping width to optimise ranging near and far

The burst width of the transmitted energy is proportional to the received energy of the echo. Ideally, the burst width should be kept as narrow as possible in order to maximise the ranging resolution. However, if the burst width is insufficient, the echo could be buried in noise. In one embodiment, an adaptive scheme that tailors the burst width to detected echo could result in an optimum burst width. Given that the near field of the envelope is of primary interest, a longer transmit burst will simply produce a larger and longer echo envelope. The near field detection threshold should therefore be a low as possible to pick up the leading echo that reflects the nearest point. A hysteresis filter can be placed at the comparator output to reject spurious glitches caused by noise when the threshold function is set to a low and sensitive level.

Capture window on repeated echoes placed in LUT (Digital Gain)

A method of accumulating multiple ranging measurements on static objects can be used by storing a accumulating the ranging values in a look up table. The look up table is indexed based on the time of flight of the returned echo and the contents can be incremented by the digitized echo sample. This will have the effect of averaging out any noise component while applying gain to the echo envelope. It has the added benefit of using shorter transmit pulses that should result in better ranging resolution of the detected objects. It can also serve as a gain function. The technique does assume that the sensor and the target are stationary with respect to each other so its use is limited to a small number of measurements while the sensor is near stationary or moving very slowly such that the movement is negligible over the range of measurements.

Adaptive gain to distance using LUT integration

As the received echo amplitude reduces with ranging distance, a gain function can be applied to the accumulation function that updates the LUT that is proportional to the time received.

Example Algorithm

The use of narrow beam ultrasound triangulating sensors is the basis for measuring grass length. The triangulating sensors are on orthogonal axes with one sensor aligned near the vertical Z axis. The use of multiple sensors is used to measure the slope of the ground as well as the angle of the leg to the ground, as illustrated in Figure 1.
Two algorithms are now described, a base and advanced algorithm, although it will be appreciated that other algorithms can be used. The algorithms are incremental such that the base algorithm will give an approximate value for grass length while the incremental additions should improve the modelling and hence the accuracy of the grass height measurement. Use is made of three or four ultrasound sensors to triangulate the grass length along the Z axis which runs through the centre of the leg to the heel of the walker's foot or the centre of a walking pole for pole mounted systems. All three sensors are used to map out a plane in 3d Euclidian space that represents the ground during the calibration step and the grass during pasture walking. With three sensors, the slope of the ground is constantly measured with respect to the sensors. All grass measurements are only valid while the foot is in contact with the ground as it is assumed that the heel is the reference point or position of the ground irrespective of grass length or slope.

Given that it is very important to measure while the foot is in contact with the ground, it is necessary to deduce this by multiple and indirect means. The Y1 and Y2 ultrasound sensors can be used to measure the changing slope along the Y axis which is parallel to the direction of the leg rotation and hence the orientation of the leg while the built in accelerometers are used to detect the foot plonk. A high quality nine axis orientation sensor can be used to give an even better indication of the walking cycle such that multiple measurements can be made while the foot is in contact with the ground and the leg and sensors are sweeping a range of angles.

The base algorithm uses simple lines for each ranging beam from the ultrasound sensors. As the beam is divergent by a small angle, a slight error results when the beam is at acute angles to the reflecting surface. One incremental improvement of the algorithm makes use of multiple orientations of the sensor while the leg hinges over the foot during walking to create a synthetic aperture for the ultrasound ranging sensors. The distance along the Z axis which is in the centre of the leg or the centre of a walking pole is calculated from grass canopy to the height of the sensor along the Z axis. As only 3 non-linear points or sensors are required to calculate a plane, the extra sensor is used to calculate Z axis distances for which an average or median distance can be selected.

The further incremental refinement of the algorithm models each ultrasound beam as a 3d conic section whose ends intersect with a 3D plane to model the 3 dimensional wavefront from each transducer that reflects off the nearest surface point of contact. 3D plane geometry is used and in conjunction with the orientation sensor, a modelled localized 3D landscape is created. Quaternions are used to perform the necessary 3D rotations that take account of the orientation of the leg rotation, the slope of the ground and the direction of walking with respect to the slope.

Orientation and frame of Reference

For the purposes of orientation, a fixed frame of reference has been chosen that is locked to the sensors. Using a right handed convention, the front of the boot is facing in the positive Y direction, the right hand side of the boot is on the X axis and is perpendicular to an imaginary line running from the heel to the middle toe of the foot that forms the Y axis. The Z axis is the vertical or Zenith and runs upwards as a line through the centre of the leg when nominally straight and standing. For pole mounted sensors, the Z axis runs through the centre of the pole. With this convention, the terms pitch, yaw and roll will be used. Pitch indicates rotation about the X axis and the knee joint rotation while walking will cause the sensor to change in pitch. The sensors will pitch considerably while walking in any direction. Roll is likely to be near zero as it is a rotation about the Y axis and no leg joints provide a degree of freedom to support rolling. Rolling can only occur if the walker's gait is one of rocking from side to side as they walk step by step or if the ground is very uneven. Pole mounted systems though will be subject to roll. Yaw is the turning about the Z axis and will occur if the walker changes direction or the walking pole is twisted or rotated.

All of the sensors are mounted and aligned such that two sensors are tilted out from the Z axis along the X axis and the other two sensors are mounted at angles to the Z axis but approximately aligned along the Y axis.

In order to simulate a walking (Gait) action of a user a number of simplified assumptions are used to estimate the mode of walking. Firstly, the knee joint has one degree of freedom such that the only rotation is pitching while walking with little or no roll.

A further simplification makes use of the fact that the X1 sensor remains almost parallel to the leg irrespective of rotation. Using this assumption and treating the range sensors as measuring with a line beam, the pitch should not significantly affect the X1 range measurement as it is purely a rotation on the ankle joint while the foot is in contact with the ground. Such assumption is illustrated in Figure 4.

Example Sensor Embodiment

With reference again to Figure 2, illustrating a plurality of sensors arranged according to one embodiment, the sensors used are narrow beam 200KHz transducers. They have a nominal beam angle of +-7 degrees which is their 3dB sensitivity point. They have a range of 0.1 to 2M. The sensors are mounted in a linear array along the Y axis and are tilted along the X and Y plane. The X sensors are used to measure the slope of the hill along the X axis as well as performing the actual grass length measurement. The Y sensors are tilted slightly along the X axis similar to X1 by the same angle of s1 in order that their beam cone does not intersect with the walker's boot. In addition, the Y sensors are aligned in front and behind the walker at approximately 30 degrees to vertical. In one embodiment the sensors shown in Figure 2 are orientated as follows:

s1 is the sensor angle on the XY plane from the Y axis for the Y1,Y2 sensor sensors and is > half the beam angle (12°).
s2 is the sensor angle along the x axis from the Z axis for the X2 sensor and is (30°)

sy is the sensor angle along the y axis from the Z axis for the Y1 and Y2 sensors and is (30°). The orientation can be described as Euler rotations or with spherical coordinates. Using Euler rotations: Starting with an orientation pointing directly up in line with the Z axis, The angular orientations are set by extrinsic rotations .

Y1 sensor undergoes a rotation of 180 + sy about the Y axis, a rotation of 90-s1 about the Z axis.

Y2 sensor undergoes a rotation of 180 - sy about the Y axis, a rotation of -90+s1 about the Z axis.

X1 sensor undergoes a rotation of 180 - s1 about the Y axis.

X2 sensor undergoes a rotation of 180 - s2 about the Y axis.

Figure 2 assumes that the sensor is positioned along the Z-axis but this is not possible as the Z-Axis is inside the leg of the walker. A further formula is required to calculate the height displacement as a result of the sensor being mounted on the side of the walker's boot. Figure 3 is an illustration of horizontal displacement r of sensor causing additional height displacement h.

Example Embodiment

The measurement of ground and grass length assumes that the foot is placed on the ground and the leg is reasonably vertical. As walking involves significant periods where the foot is moving and not in contact with the ground, it is important to avoid measuring grass height while the foot is in motion.

The angle of the knee(boot) should also be ideally near vertical with the foot in contact with the ground when the measurement is taken. As walking is periodic and has a repetitive cycle, it can be broken down into a number of phases. Starting with the foot plonk where the foot contacts the ground, the knee rotates about the ankle joint in a pitching motion as the body's centre of mass passes from behind to in front. This is the ideal time to perform the measurement before the foot is raised off the ground and swung forward to the next ground position. Accelerometers and the Y1, Y2 sensors can help to choose the correct window for taking X1 and X2 ranging measurements. The accelerometers can detect the foot plonk, after this, the Y1 and Y2 ranging sensors can be used to approximate the leg pitch with respect to the ground. Ideally, when Y1 and Y2 are roughly equal, the leg is perpendicular to the ground in the Y axis and is a good time to take a set of averaged measurements. All ranging measurements should be taken in immediate sequence such that there is negligible motion between the 1$^{st}$ and last (4$^{th}$) ranging measurement for the set of sensors.

A measure of how perpendicular the sensor is to the ground can be calculated by taking the ratio of Y2 to Y1 and values close to 1.0 are near perpendicular.

Values outside of a particular threshold for this ratio can simply ignore the X1, X2 measurements.

A more elaborate scheme involves the use of an orientation sensor, as described above. This sensor will report orientation of the leg or pole using a 9 axis sensor that includes gyro, accelerometer and magneto sensor. Using a complementary filter, orientation angles are output by the sensor in the form of Euler angles or Quaternions. The use of the sensor can give the absolute orientation of the leg with respect to Earth's frame of reference as opposed to the localized frame of reference of a sloping hill. This would allow easy detection of walking up hill or downhill and better establish the phase of the walking step cycle.

Given that the sensors are in continuous motion even while the foot is in contact with the ground, the area of grass canopy will be swept by the walking motion. This means that a better resolution for calculating the grass length can be achieved within each step cycle. Using the orientation sensor, multiple ranges can be measured as the knee rotates over the angle joint while the foot is in contact with the ground. The multiple ranges can be fed into the Z axis measurement formula to calculate a triangulated distance to grass canopy with a far higher number of ranging samples. In this case the sensor's Z axis does not need to be perpendicular to the ground but can rotate through an angular range to produce a more accurate measurement for grass height.

As the grass is likely to vary in height and the ground may be bumpy, it is important to have a weighted average of the grass height based on the latest measurements and the decaying history of measurements.

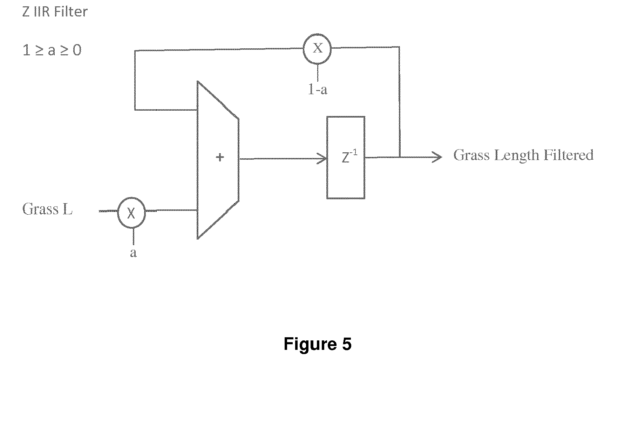

To this end, the Z axis distance representing grass height should be fed to an Infinite Impulse Response low pass filter with a programmable time constant. A schematic of the filter is illustrated in Figure 5. With a=1, the filter is simply bypassed while a=0.1, each new value contributes 10% to the output while each preceding value diminishes by 10%.

Calculation of Grass Height

The method by which grass height is calculated using four ultrasound sensors mounted in four directions as already described. The method must allow for any angular rotation of the sensor such as roll, pitch or yaw as the sensor could be pole mounted and not just boot mounted. The algorithm also takes account of sloping pasture in any direction.

One approach is to handle this uses all four sensors to calculate the distance to the ground along the Z axis. A spherical coordinate system is used with each sensor positioned at the origin. The sensors are actually positioned at a slight displacement to each other but this can be corrected later when we convert to Cartesian coordinates. The result is a model of a localised 3D landscape whose origin is at the sensor height but in the centre of the pole or centre of the walker's leg. Each ultrasound ranging sensor is modelled as a line at an angle from the sensor's point of origin to the point of contact on the ground. The ground within the proximity of the sensors is assumed to be flat. This covers approximately 0.1 square meter for a sensor height of 0.5M on flat ground.

It will be appreciated that in the context of the present invention grass has been described in the above embodiments that can be equally applied to other agricultural products that require accurate measurement.

The embodiments in the invention described with reference to the drawings comprise a computer apparatus and/or processes performed in a computer apparatus. However, the invention also extends to computer programs, particularly computer programs stored on or in a carrier adapted to bring the invention into practice. The program may be in the form of source code, object code, or a code intermediate source and object code, such as in partially compiled form or in any other form suitable for use in the implementation of the method according to the invention. The carrier may comprise a storage medium such as ROM, e.g. CD ROM, or magnetic recording medium, e.g. a floppy disk or hard disk. The carrier may be an electrical or optical signal which may be transmitted via an electrical or an optical cable or by radio or other means.

In the specification the terms "comprise, comprises, comprised and comprising" or any variation thereof and the terms include, includes, included and including" or any variation thereof are considered to be totally interchangeable and they should all be afforded the widest possible interpretation and vice versa.

The invention is not limited to the embodiments hereinbefore described but may be varied in both construction and detail.

**Claims**

1. A device for measuring the quantity of an agricultural product comprising:

   at least one ultrasonic transducer device configured to measure the height of the agricultural product with respect to a ground; **characterised in that** there is provided
   at least two ultrasonic transducers configured to allow the orientation or
   slope of the ground to be calculated, such that the at least three transducers can be at arbitrary orientations with respect to the ground when the device is in motion.

2. The device of claim 1 wherein the ultrasonic transducers are positioned on two orthogonal axes to provide at least three reference points.

3. The device of claim 2 wherein the three points are assumed to lie on a plane representing the top of the agricultural product to be measured that sits above the ground reference plane and assumed to be parallel to the ground reference plane.

4. The device of claim 3 wherein the vertical distance between the top of the agricultural product and the ground reference plane is calculated giving an accurate height of the agricultural product.

5. The device of any preceding claim wherein at least one ultrasonic transducer comprises a narrow beam ultrasonic transducer.

6. The device of any preceding claim a transducer array measures the time of flight between the transmitted sonar pulse and the echoed return that has reflected from the agricultural product.

7. The device of any preceding claim comprising a fourth ultrasonic transducer mounted on two axes with said at least three ultrasonic transducers that are orthogonal ensuring that the reflection points can result in vectors that are close to orthogonal to maximise the accuracy in calculating the top of the agricultural product.

8. The device of claim 7 wherein the fourth ultrasonic transducer allows for more accurate determination of the plane by calculating multiple planes using a selection of at least three ultrasonic transducers.

9. The device of claims 7 or 8 comprising means for calculating multiple grass lengths from multiple selections of four sensors, an average or median grass length can be calculated that better reflects the grass length for that sample area.

10. The device of any preceding claim calculating multiple product lengths from multiple selections of four transducers, an average or median product length can be calculated that better reflects the product length for that sample area.

11. The device of any preceding claim comprising a housing, wherein the housing supports transducer adjustment in a ball and socket arrangement with an internal fastener to lock the angle in place.

12. The device of any preceding claim wherein at least one transducer is mounted in a housing with the transducer angles fixed configured with openings at various orientations.

13. The device of any preceding claim wherein at least one transducer is mounted in canisters attached to protruding stalks that are set at pre-desired angles.

**14.** The device of any preceding claim comprising an orientation sensor to measure the orientation of the device when moving and to determine when a measurement is about to be made.

**15.** The device of claim 14 wherein the orientation sensor comprises a nine axis orientation sensor.

**Figure 1**

**Figure 2**

Z Axis

r

X1

X2

H

X Axis

h

**Figure 3**

X1

X1

**Figure 4**

**Figure 5**

Europäisches
Patentamt

European
Patent Office

Office européen
des brevets

## EUROPEAN SEARCH REPORT

Application Number

EP 13 18 9371

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A,D | WO 2013/041636 A1 (MONFORD AG SYSTEMS LTD [IE]) 28 March 2013 (2013-03-28) * abstract * | 1-15 | INV. A01B79/00 G01S15/08 |
| A | WO 2008/151371 A1 (AGRICULTURE VICTORIA SERV PTY [AU]; AWTY IVOR MALCOLM [AU]) 18 December 2008 (2008-12-18) * abstract; claim 1 * | 1-15 | |
| A | WO 2006/009472 A2 (GALLAGHER GROUP LTD [NZ]; SCHAARE PETER NIVEN [NZ]) 26 January 2006 (2006-01-26) * claims 12,13 * | 1-15 | |

TECHNICAL FIELDS
SEARCHED       (IPC)

A01B
G01S

The present search report has been drawn up for all claims

| Place of search | Date of completion of the search | Examiner |
|---|---|---|
| Munich | 3 April 2014 | Van Woensel, Gerry |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 13 18 9371

This annex lists the patent family members relating to the patent documents cited in the above-mentioned European search report.
The members are as contained in the European Patent Office EDP file on
The European Patent Office is in no way liable for these particulars which are merely given for the purpose of information.

03-04-2014

| Patent document cited in search report | Publication date | Patent family member(s) | | Publication date |
|---|---|---|---|---|
| WO 2013041636 A1 | 28-03-2013 | NONE | | |
| WO 2008151371 A1 | 18-12-2008 | AU | 2008261611 A1 | 18-12-2008 |
| | | NZ | 582119 A | 24-02-2012 |
| | | WO | 2008151371 A1 | 18-12-2008 |
| WO 2006009472 A2 | 26-01-2006 | AU | 2005264788 A1 | 26-01-2006 |
| | | NZ | 534189 A | 30-11-2006 |
| | | WO | 2006009472 A2 | 26-01-2006 |

EPO FORM P0459

For more details about this annex : see Official Journal of the European Patent Office, No. 12/82

**EP 2 862 429 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2013041636 A1

- WO 2013041636 A